# EUROPÄISCHE PATENTSCHRIFT

(11) **EP 3 881 157 B1**
(45) Veröffentlichungstag und Bekanntmachung des Hinweises auf die Patenterteilung: **18.01.2023**
(21) Anmeldenummer: 19805204.5
(22) Anmeldetag: 13.11.2019
(51) Int. Cl.: G05D 23/19, F24F 11/62, F24F 13/08, F24F 13/20, F24F 110/10, F24F 110/20

(54) **ANORDNUNG ZUR REGELUNG DER TEMPERATUR UND/ODER LUFTFEUCHTIGKEIT**
ASSEMBLY FOR CONTROLLING THE TEMPERATURE AND/OR HUMIDITY OF AIR
DISPOSITIF DE RÉGULATION DE LA TEMPÉRATURE ET/OU DE L'HUMIDITÉ DE L'AIR

(30) Priorität: 15.11.2018 DE 102018128755; 11.12.2018 DE 102018131790
(43) Veröffentlichungstag der Anmeldung: 22.09.2021
(73) Patentinhaber: Seifert Systems Ltd., 3000 Birzebbuga (MT)
(72) Erfinder: SEIFERT, Michael, Rudi, Madliena-Malta SWQ1013 (MT); ZAMMIT, Glenn, Ibragg-Malta SWQ206 (MT); CASSAR, Joseph, Qormi-Malta QRM2100 (MT)
(74) Vertreter: Kruspig, Volkmar
(86) Internationale Anmeldenummer: PCT/EP2019/081095
(87) Internationale Veröffentlichungsnummer: WO 2020/099448

(56) Entgegenhaltungen:
- DE-A1-102016 108 840
- US-A1- 2012 248 210
- US-A1- 2018 106 489
- US-A1- 2018 245 811

## Beschreibung

Die Erfindung geht aus von einer Anordnung zur Regelung der Temperatur und/oder Luftfeuchtigkeit in mit einer Klimatisierungseinrichtung versehenen, gegenüber ihrer Umgebung verschlossenen oder verschließbaren Gebilden wie Schaltschränken, Steuerungsanlagen, Maschinensteuerungen, elektrischen Anschlusskästen, Mobilfunkstationen oder dergleichen umhauste Einrichtungen, bestehend aus einem mehrteiligen Gehäuse mit einer Vielzahl von Ausnehmungen oder Ventilationsschlitzen, wobei im Gehäuse ein Verdrahtungsträger zur Aufnahme elektronischer Bauelemente nebst Anschlussklemmen für die Klimatisierungseinrichtung vorgesehen ist und weiterhin mit einem Bedienelement zur Vorgabe von Temperatur- und/oder Luftfeuchtigkeitssollwerten gemäß Oberbegriff des Anspruches 1.

Aus der DE 10 2013 111 925 A1 ist eine Thermostateinrichtung mit mindestens zwei Thermostaten vorbekannt, die an einer normierten Schiene gehalten sind. Die Thermostate sind hierbei quer zur Schienenachse angeordnet.

Bekannte Thermostate, zum Beispiel ausgebildet als Bimetall-Thermostate, sind mit einem Einstellelement versehen, über das der Betriebspunkt des Thermostaten einstellbar ist. Derartige Thermostaten können in einem Schaltschrank montiert werden, wobei dieser sogenannte DIN-Schienen bzw. Hutschienen aufweist, auf denen der Thermostat und gegebenenfalls auch andere Schalt-, Steuer- oder Sicherungselemente montiert werden.

Mit der Lösung nach DE 10 2013 111 925 soll durch die Anordnung der Thermostate quer zur Schiene, das heißt bezogen auf die Thermostate übereinanderliegend, erreicht werden, dass bezogen auf die Schienenbreite nicht unnötig Platz benötigt wird, um andere, weitere elektrische Betriebsmittel auf der entsprechenden Schiene montieren zu können.

Gemäß einer dort bevorzugten Ausführungsform sind die Thermostate mit einem gemeinsamen Gehäuse ausgeführt, dass Verriegelungselemente zum Verriegeln mit der Befestigungsschiene besitzt. Dies soll eine einfache Montage ermöglichen, da lediglich das gemeinsame Gehäuse an die Schiene angesetzt werden muss. Die Verriegelungselemente sind mit zwei, eine Seitenwange abschnittsweise umgreifenden Positionierstücken einerseits und zwei die andere Seitenwange clipsartig umgreifenden Rastelementen ausgeführt. Das bekannte Gehäuse weist Zugriffsöffnungen zur Verschraubung von Anschlusskabeln an Kontaktblöcken auf. Bei einem Beispiel der vorbekannten Lehre ist das Gehäuse mehrteilig mit einem Gehäuseunterteil, das die Thermostate trägt, und einem Gehäusedeckel ausgeführt, der mit dem Gehäuseunterteil verrastet ist und Ausnehmungen für Bedienelemente besitzt.

Einzelheiten zur Art und Weise der Erfassung der Umgebungstemperaturen zum Ableiten exakter Regelgrößen sowie zum inneren Aufbau der Thermostate sind der DE 10 2013 111 925 A1 nicht zu entnehmen.

Aus der DE 66 05 094 A1 ist eine Thermostat-Hygrostat-Kombination vorbekannt, die dadurch gekennzeichnet ist, dass beide Geräte räumlich in unmittelbarer Nähe vereinigt werden.

Konkret sind Thermostat und Hygrostat in einem gemeinsamen Gehäuse untergebracht, wobei die Möglichkeit der gegenseitigen Beeinflussung der Einstellung der Sollwerte des Hygrostaten und des Thermostaten besteht. Insofern ist zur Herstellung eines idealen Raumklimas jedem Temperaturwert ein bestimmter Luftfeuchtigkeitswert zugeordnet.

In Ausgestaltung der Thermostat-Hygrostat-Kombination sind beide Geräte auf einer gemeinsamen Grundplatte mit einem gemeinsamen, beide Geräte umschließenden Gehäusedeckel untergebracht.

Auch dieser Lösung des Standes der Technik sind keine Einzelheiten zur Temperatur bzw. Luftfeuchtigkeitserfassung sowie zum Aufbau der hierfür notwendigen Sensorik zu entnehmen.

In US 2012/248210 A1 wird die Ausbildung eines elektronischen Thermostates für die Anwendung zur Klimatisierung in Gebäuden offenbart.

Dieser Thermostat soll eine Anzeige besitzen und leicht sowie intuitiv bedienbar sein. Weiterhin soll der vorbekannte Thermostat über eine Möglichkeit einer internen Stromversorgung über eine Batteriepufferung nebst Ladefunktion verfügen.

Auch weist der bekannte Thermostat einen Mikrocontroller zur Auswertung verschiedener Messsignale sowie zur Abgabe von Steuersignalen zum Zweck der gewünschten Klimatisierung, d. h. zur Erwärmung oder Kühlung des Gebäudes auf. U.a. wird auf zwei Temperatursensoren verwiesen, die als Sensorpaar ausgeführt sind. Ein erster, oberer Temperatursensor ist so angeordnet, dass eine optimale Erfassung der Umgebungs- oder außenseitigen Temperatur vorgenommen werden kann. Ein zweiter, unterer Temperatursensor ist so ausgebildet, dass er die Temperatur in der Nähe von wärmeproduzierenden Bauelementen innerhalb des Thermostates erfasst. Durch diese weitere Erfassung der Temperatur im Inneren des Thermostates soll es möglich sein, unerwünschte Effekte einer Temperaturverfälschung zu vermeiden.

Aus US 2018/245811 A1 ist ein Thermostat bekannt, der zum Steuern der Temperatur und der Belüftung in Räumen eines Gebäudes vorgesehen ist. Diesbezüglich verfügt dieser Thermostat nicht nur über eine Touch-Screen-Bedieneinheit und ein entsprechendes Display, sondern auch über eine Gehäusekonfiguration, die eine Montage an einer Wand in einem Gebäuderaum ermöglicht. Des Weiteren wird ein Bewegungssensor beschrieben, der ausgebildet ist, um zu erkennen, ob sich gegebenenfalls Personen in dem klimatisch zu überwachenden Raum befinden.

In DE 10 2016 108840 A1 wird eine Vorrichtung zur Temperaturregelung in explosionsgefährdeten Bereichen beschrieben. Ein Temperaturregler weist eine Messoberfläche auf die zumindest bereichsweise direkt an einer Innenwand des Gehäuses der Vorrichtung anliegt und mit einer Erdungsfahne elektrisch verbunden ist. Die Erdungsfahne ist mit einer weiteren Leitung elektrisch verbunden, die durch die Öffnung geführt ist und vorzugsweise eine Einheit bildet.

US 2018/106489 A1 betrifft eine Steuervorrichtung, wie beispielsweise eine smartes Thermostat. Die Steuervorrichtung umfasst mindestens einen Umgebungssensor, bei dem es sich mindestens um einen Temperatursensor handelt, der aber auch andere Umgebungssensoren, wie z. B. einen Feuchtigkeitssensor, umfassen kann, die die jeweiligen zu steuernden und/oder zu überwachenden Umgebungsbedingungen bestimmen. Typischerweise umfassen die Umgebungssensoren in der Steuervorrichtung mindestens einen Temperatursensor und einen Feuchtigkeitssensor.

Aus dem Vorgenannten ist es Aufgabe der Erfindung, eine weiterentwickelte Anordnung zur Regelung der Temperatur und/oder der Luftfeuchtigkeit in mit einer Klimatisierungseinrichtung versehenen, gegenüber ihrer Umgebung verschlossen oder verschließbaren Gebilden, wie zum Beispiel Schaltschränken, Anschlusskästen, Mobilfunkstationen oder dergleichen umhauste Einrichtungen anzugeben. Die zu schaffende Anordnung soll in exakter Weise die klimatischen Bedingungen in der umhausten Einrichtung erfassen, um vorgegebene Temperatur- bzw. Feuchtigkeitssollwerte möglichst exakt und energiesparend einzuhalten. Dabei soll ein Überschwingen, insbesondere bei Umschaltprozessen von Erwärmung und Kühlung bzw. umgekehrt vermieden werden.

Die Lösung der Aufgabe der Erfindung erfolgt mit einer Merkmalskombination gemäß der Lehre nach Anspruch 1, wobei die Unteransprüche mindestens zweckmäßige Ausgestaltungen und Weiterbildungen darstellen.

Demnach wird von einer an sich bekannten Anordnung zur Regelung der Temperatur und/oder Luftfeuchtigkeit ausgegangen, die in mit einer Klimatisierungseinrichtung versehenen, gegenüber ihrer Umgebung verschlossenen oder verschließbaren Gebilden angeordnet werden kann. Bei diesen verschließbaren Gebilden kann es sich um Schaltschränke, Steuerungsanlagen, Maschinensteuerungen, elektrische Anschlusskästen, Mobilfunkstationen, Computeranordnungen oder dergleichen umhauste Einrichtungen handeln. Dabei kommt es darauf an, in den umhausten Einrichtungen ein möglichst stabiles Klima einzustellen, so dass optimale Betriebsbedingungen für die in der Umhausung befindlichen Bauteile, Baugruppen oder Elemente eingehalten werden. Dabei gilt es auch, Taupunkterscheinungen auszuschließen, insbesondere dann, wenn eine derartige Umhausung mit elektronischen Komponenten, wie zum Beispiel im Falle einer Mobilfunkstation unter rauen Umweltbedingungen sich im Freien befinden.

Die Anordnung besteht aus einem mehrteiligen Gehäuse, zum Beispiel aus einem Kunststoffmaterial, wobei das Gehäuse eine Vielzahl von Ausnehmungen bzw. Ventilationsschlitzen aufweist.

Im Gehäuse ist ein Verdrahtungsträger, insbesondere eine Leiterplatte, zur Aufnahme elektronischer Bauelemente nebst Anschlussklemmen für die Klimatisierungseinrichtung vorgesehen. Weiterhin ist mindestens ein Bedienelement zur Vorgabe von Temperatur- und/oder Luftfeuchtigkeitssollwerten vorhanden. Die Vorgabe der Temperatur- und/oder Luftfeuchtigkeitssollwerte kann neben der Möglichkeit eines manuellen Einstellens über zum Beispiel ein Potentiometer auch elektronisch erfolgen, beispielsweise über eine drahtlose oder drahtgebundene Dateneingabeschnittstelle.

Auf bzw. an dem Verdrahtungsträger ist ein erster Sensor zur Erfassung der relativen Umgebungsluftfeuchte befindlich. Weiterhin ist ein zweiter Sensor zur Erfassung der Temperatur der in das Gehäuse einströmenden Umgebungsluft sowie ein dritter Sensor zur direkten oder indirekten Erfassung der Verlustwärme der wesentlichsten elektronischen Bauelemente, die die Anordnung aufweist, vorgesehen.

Der dritte Sensor kann hierbei ein Temperatursensor aber auch ein Stromsensor sein, der über den erfassten Stromfluss mittelbar auf die Verlustwärme und die hierdurch resultierende Erwärmung im Gehäuseinneren schließt.

Der Verdrahtungsträger nimmt eine Stecker- oder Buchseneinheit zum Anschluss eines externen Temperatursensors auf, wobei über einen Durchbruch im Gehäuse ein Zugang zur Stecker- oder Buchseneinheit gegeben ist.

Beispielsweise kann hier der Verdrahtungsträger eine auf einer Leiterplatte verlötete Buchse umfassen, die zu einem Klinkenstecker kompatibel ist, welcher über eine Kabelverbindung zum externen Temperatursensor führt.

Erfindungsgemäß ist der Durchbruch mittels einer Kappe oder eines Deckels verschließbar. Dies bedeutet, dass erst im Falle der tatsächlichen Notwendigkeit oder des Einsatzes eines externen Temperatursensors der Deckel entfernt werden kann bzw. entfernt werden muss.

Um beim Einbringen, zum Beispiel eines Klinkensteckers in Richtung zugehöriger Buchse, die sich innerhalb des Gehäuses befindet, ein zufälliges Berühren mit weiteren elektronischen Bauteilen, Komponenten oder Leitungen zu verhindern, ist nach Entfernen des Deckels oder der Kappe zunächst ein Zentrierring in den Durchbruch einzusetzen.

Der Zentrierring mit trichter- oder konusartiger Innengestalt bietet diesbezüglich eine exakte Führung des beispielhaft erwähnten Klinkensteckers hin in Richtung zugehöriger, im Gehäuse befindlicher Buchse.

Mindestens eine der Flächen des Gehäuses, insbesondere die Gehäuserückseite, weist nasenartige Fortsätze zum Befestigen des Gehäuses auf einer Norm-Hutschiene auf.

In Ausgestaltung der Erfindung ist der zweite Sensor in einem Abstand von verlustwärmerelevanten Bauteilen auf einer der Seiten des Verdrahtungsträgers befindlich.

Der externe Sensor ist bevorzugt in einem mit Installationsschlitzen versehenen Miniaturgehäuse untergebracht, wobei das Miniaturgehäuse Mittel zum Befestigen, ausgebildet zum Beispiel als Magnet, Befestigungsschraube, Befestigungsdurchbruch oder dergleichen Vorrichtung aufweist.

Die nasenartigen Fortsätze zum Fixieren des Gehäuses auf einer Norm-Hutschiene sind so ausgebildet, dass ausschließlich eine vertikale Befestigung des Gehäuses auf der Norm-Hutschiene möglich ist.

In Verbindung mit der Ausbildung der Ventilationsschlitze wird bezogen auf die hierdurch vorgegebene Orientierung des Gehäuses eine optimale Durchströmung und damit ein schnelles Ansprechen der diesbezüglichen Sensorik gewährleistet.

Die Anordnung weist einen Mikrocontroller auf, welcher programmgesteuert mindestens die Temperaturmesswerte des zweiten und dritten Sensors erfasst und die reale Umgebungstemperatur unter Berücksichtigung der Verlustwärme prädiktiv bestimmt. Hieraus wird ein Korrekturfaktor zur Regelungsauslösung ermittelt.

Weiterhin dient der Mikrocontroller dazu, die Messwerte des ersten Sensors auf der Basis der prädiktiven Umgebungstemperaturwerte zu korrigieren.

Mit Hilfe des Mikrocontrollers verbessert sich die Regelungsgenauigkeit erheblich. Unnötige Temperaturgradienten in der zu klimatisierenden Umhausung werden vermieden.

Der Mikrocontroller liest die Temperaturmesswerte des zweiten und dritten Sensors aus und kalkuliert über einen implementierten Algorithmus die Umgebungstemperatur in der Umhausung, und zwar unter Berücksichtigung der Verlustwärme, welche durch die eigentliche Anordnung entsteht.

Verlustwärme wird hier zum einen durch die Leiterzüge auf dem Verdrahtungsträger aber auch durch aktive und passive Bauelemente erzeugt. Hier sind insbesondere die Spulen der Relais zur Ansteuerung der Klimatisierungseinrichtung zu erwähnen.

Mit Hilfe des Mikrocontrollers gelingt es auch, Verzögerungseffekte hinsichtlich der Änderung der Innentemperatur im Gehäuse bezogen auf die Umgebungstemperatur zu berücksichtigen, was sowohl bei der Erwärmung als auch der Kühlung des Volumens innerhalb der Umhausung gilt.

Mit Hilfe des Mikrocontrollers wird also zum einen das Maß der notwendigen Temperaturänderung als Regelungsgröße und die Änderungsrate vorgegeben. Weiterhin ermittelt der Mikrocontroller stationäre bzw. eingeschwungene Zustände und den jeweiligen Status der Klimatisierungseinrichtung und gibt Schaltwerte für eine Statusänderung vor, zum Beispiel von Heizen zu Kühlen oder von Kühlen zu Heizen.

Im Falle der Vorgabe von Luftfeuchtigkeitsregelwerten bestimmt der Mikrocontroller auf der Basis der kalkulierten Umgebungstemperaturwerte die relative Luftfeuchtigkeit in exakterer Weise.

Die Erfindung soll nachstehend anhand eines Ausführungsbeispieles sowie unter Zuhilfenahme von Figuren näher erläutert werden.

Hierbei zeigen:
- Fig. 1: eine Ansicht auf die erfindungsgemäße Anordnung in Form eines zweiteiligen Gehäuses mit Ventilationsschlitzen und verschlossenem Durchbruch;
- Fig. 2: eine Darstellung ähnlich derjenigen nach Fig. 1, jedoch mit entfernter Kappe unter Freilegung des Durchbruches sowie nach Einführung eines Zentrierringes;
- Fig. 3: eine Darstellung ähnlich derjenigen nach Fig. 2, jedoch mit in den Zentrierring eingestecktem Klinkenstecker, der eine Verbindung zu einer Buchse (Fig. 4) herstellt;
- Fig. 4: eine Explosivdarstellung des Gehäuses der erfindungsgemäßen Anordnung mit Bedienelement, zwei Gehäuseteilen, Leiterplatte, dort befindlichen elektronischen Baugruppen sowie Klinkenstecker und Zentrierring;
- Fig. 5: eine Darstellung eines externen Sensors mit separatem Miniaturgehäuse und Klinkensteckeranschluss;

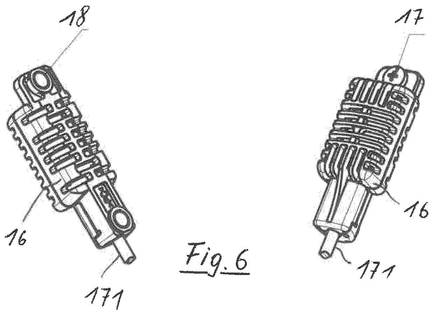

- Fig. 6: zwei Darstellungen des Miniaturgehäuses mit beispielhafter Magnetbefestigung oder Befestigung mittels Schraube.

Wie aus den Figuren ersichtlich, besteht die erfindungsgemäße Anordnung zur Regelung der Temperatur und/oder Luftfeuchtigkeit in mit einer Klimatisierungseinrichtung versehenen, gegenüber ihrer Umgebung verschlossenen oder verschließbaren Gebilden, wie zum Beispiel einem Schaltschrank (nicht gezeigt) aus einem mehrteiligen Gehäuse 1; 2.

Das Gehäuse 1; 2 weist eine Vielzahl von Ausnehmungen bzw. Ventilationsschlitzen 3 auf.

Im Gehäuse 1; 2 ist ein Verdrahtungsträger 4 zur Aufnahme elektronischer Bauelemente 5 nebst Anschlussklemmen 6 für die Klimatisierungseinrichtung vorgesehen. Weiterhin ist mindestens ein Bedienelement 7 zur Vorgabe von Temperatur- und/oder Luftfeuchtigkeitssollwerten vorhanden.

Auf dem Verdrahtungsträger 4 ist ein erster Sensor zur Erfassung der relativen Umgebungsluftfeuchte befindlich.

Weiterhin ist ein zweiter Sensor 9 zur Erfassung der Temperatur der in das Gehäuse 1; 2 einströmenden Umgebungsluft auf der Rückseite des Verdrahtungsträgers 4 und beabstandet von diesem vorgesehen.

Ein dritter Sensor 10 zur direkten oder indirekten Erfassung der Verlustwärme der wesentlichsten elektronischen Bauelemente 5 bzw. von Leitungszügen auf dem Verdrahtungsträger ist unmittelbar auf der Rückseite des Verdrahtungsträgers 4 befindlich.

Der Verdrahtungsträger 4 nimmt eine Stecker- oder Buchseneinheit 11 zum Anschluss eines externen Temperatursensors auf.

Diesbezüglich ist im Gehäuse 1 ein Durchbruch für den Zugang zur Stecker- oder Buchseneinheit 11 gegeben.

Der Durchbruch im Gehäuse 1 ist mittels einer Kappe oder einem Deckel 12 verschließbar.

Die Kappe oder der Deckel 12 kann einen Schlitz zum Auf- bzw. Abdrehen der Kappe bzw. des Deckels 12 besitzen.

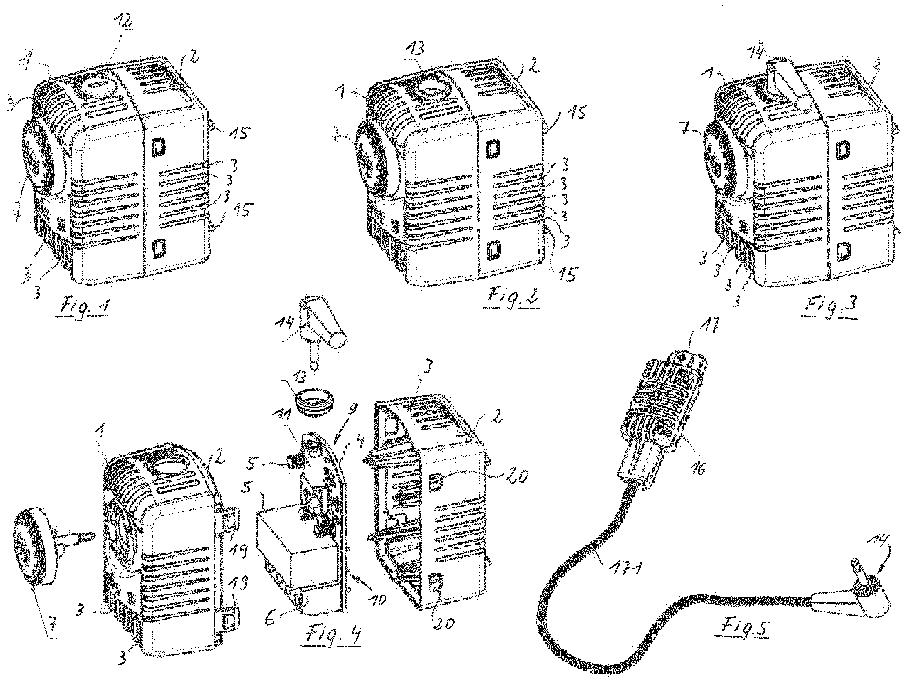

In den dann freiliegenden Durchbruch ist ein Zentrierring 13 zum sicheren Einbringen eines Steckers 14 (siehe Figur 3) fixierbar.

Mindestens eine Fläche an der Rückseite des Gehäuses 2 besitzt nasenartige Fortsätze 15 zum Befestigen auf einer Norm-Hutschiene (nicht gezeigt).

Der zweite Sensor 9 kann und soll in einem Abstand von Verlustwärme relevanten Bauteilen 5, zum Beispiel Schaltrelais auf einer der Seiten des Verdrahtungsträger 4, insbesondere der Rückseite im Hinblick auf die Darstellung nach Figur 4 angeordnet werden.

Der externe Sensor ist in einem mit Ventilationsschlitzen versehenen Miniaturgehäuse 16 befindlich.

Der im Gehäuse 16 angeordnete Sensor steht über eine Kabelverbindung 171 mit dem Klinkenstecker 14 in Verbindung.

Das Miniaturgehäuse 16 weist Mittel 17; 18 zum Befestigen auf.

Bei diesem Mittel kann es sich zum Beispiel um ein Magnet 18 bzw. eine Befestigungsschraube 17 handeln.

Die Gehäusehälften 1; 2 sind über Rastmittel, ausgestaltet als Rastnasen 19 und Rastdurchbrüche 20 verbindbar.

Auf dem Verdrahtungsträger 4 befindet sich als elektronisches Bauelement ein Mikrocontroller, welcher programmgesteuert mindestens die Temperaturmesswerte des zweiten und dritten Sensors erfasst und die reale Umgebungstemperatur unter Berücksichtigung der Verlustwärme der Anordnung prädiktiv bestimmt. Hieraus werden laufend Korrekturfaktoren zur Regelungsauslösung ermittelt.

Weiterhin ist der Mikrocontroller in der Lage, auf der Basis der prädiktiven Umgebungstemperaturwerte die Messwerte des ersten Sensors, das heißt die Feuchtigkeitsmesswerte zu korrigieren.

Je nach primärer Bestimmung der Anordnung als Feuchtigkeits- oder Temperatursensor wird eine farbige Anpassung des Betätigungselementes 7 und des Gehäuses 16 für den externen Sensor vorgenommen. Auf diese Weise ist bei übereinstimmender Farbigkeit ersichtlich, dass auf jeden Fall der richtige und passende externe Sensor zum Einsatz kommt.

Wenn der Einsatz eines externen Sensors 16 nicht notwendig ist, kann nach Entfernen des Zentrierringes 13 die Abdeckkappe bzw. der Deckel 12 zum Verschluss des Durchbruches wieder eingesetzt werden.

Die vorgestellte Anordnung kann von verschiedenen Steuerungsprinzipien ausgehen und diese unter Nutzung des Mikrocontrollers umsetzen.

Wenn beispielsweise ein Konflikt zwischen vorgegebenem Soll-Luftfeuchtigkeitswert und einem Soll-Temperaturwert erkannt wird, hat der gewählte Temperaturwert auf jeden Fall Vorrang. Dies bedeutet, dass der Luftfeuchtigkeitswert zugunsten der Einhaltung eines vorgegebenen Temperaturwertes zurücktritt. Beispielsweise findet dann eine Erwärmung des Innenraumes eines Schaltschrankes, in dem die erfindungsgemäße Anordnung eingesetzt ist, nur bis zu einem bestimmten maximalen Wert statt, und zwar unabhängig davon, ob der an sich gewünschte relative Luftfeuchtigkeitswert bereits erreicht ist. Selbiges gilt auch im Falle einer Kühlung des Innenvolumens eines Schaltschrankes unter Anwendung der erfindungsgemäßen Anordnung. Grundsätzlich ist dabei dafür Sorge zu tragen, dass der Taupunkt nicht unterschritten wird, um einen Feuchtigkeitsniederschlag an diesbezüglich empfindlichen Bauteilen innerhalb des Schaltschrankes oder einer dergleichen Einrichtung zu verhindern.

Der diesbezüglich Vorrang habende Sollwert kann auch als ein Fensterwert vorgegeben sein, das heißt mit einer zulässigen Schwankung im Hinblick auf eine positive oder negative Abweichung vom Sollwert.

Die vorgestellte Anordnung auf der Basis eines Thermostaten und Hygrostaten ist speziell zur Regelung der Temperatur- oder Luftfeuchtigkeit in Schaltschränken vorgesehen, ohne dass andere vergleichbare Anwendungen ausgeschlossen werden.

## Patentansprüche

1. Anordnung zur Regelung der Temperatur und/oder der Luftfeuchtigkeit in mit einer Klimatisierungseinrichtung versehenen, gegenüber ihrer Umgebung verschlossenen oder verschließbaren Gebilden, wie Schaltschränken, Steuerungsanlagen, Maschinensteuerungen, elektrischen Anschlusskästen, Mobilfunkstationen oder dergleichen umhauste Einrichtungen, wobei die Anordnung aus einem mehrteiligen Gehäuse (1; 2) mit einer Vielzahl von Ausnehmungen oder Ventilationsschlitzen (3) besteht, wobei im Gehäuse (1; 2) ein Verdrahtungsträger (4) zur Aufnahme elektronischer Bauelemente (5) nebst Anschlussklemmen (6) für die Klimatisierungseinrichtung vorgesehen ist, und weiterhin mit einem Bedienelement (7) zur Vorgabe von Temperatur- und/oder Luftfeuchtigkeitssollwerten,
wobei
auf dem Verdrahtungsträger (4) ein erster Sensor zur Erfassung der relativen Umgebungsluftfeuchte, ein zweiter Sensor (9) zur Erfassung der Temperatur der in das Gehäuse (1; 2) einströmenden Umgebungsluft sowie ein dritter Sensor (10) zur direkten oder indirekten Erfassung der Verlustwärme der elektronischen Bauelemente (5) vorgesehen ist,
**dadurch gekennzeichnet, dass**
der Verdrahtungsträger (4) eine Stecker- oder Buchseneinheit (11) zum Anschluss eines externen Temperatursensors aufweist, wobei über einen Durchbruch im Gehäuse (1) ein Zugang zur Stecker- oder Buchseneinheit (11) gegeben ist, der Durchbruch im verschlossenen Zustand mittels einer Kappe oder eines Deckels (12) verschlossen ist, nach Entfernen des Deckels oder der Kappe (12) in den Durchbruch ein Zentrierring (13) fixiert ist, sodass ein Stecker oder eine Kupplungsbuchse (14)sicher eingebracht ist, wobei der Stecker oder die Kupplungsbuchse (14) über eine Kabelverbindung zum externen Temperatursensor führt,
wobei der Zentrierring (13) eine trichter- oder konusartige Innengestalt aufweist, wobei auf dem Verdrahtungsträger (4) ein Mikrocontroller vorgesehen ist, welcher programmgesteuert mindestens die Temperaturmesswerte des zweiten und dritten Sensors (9; 10) erfasst und die reale Umgebungstemperatur unter Berücksichtigung der Verlustwärme prädiktiv bestimmt und hieraus einen Korrekturfaktor zur Regelungsauslösung ermittelt.

2. Anordnung nach Anspruch 1,
**dadurch gekennzeichnet, dass**
mindestens eine Fläche des Gehäuses (2) nasenartige Fortsätze (15) zum Befestigen auf einer Norm-Hutschiene aufweist.

3. Anordnung nach einem der vorangegangenen Ansprüche,
**dadurch gekennzeichnet, dass**
der zweite Sensor (9) in einem Abstand von verlustwärmerelevanten Bauteilen auf einer der Seiten des Verdrahtungsträgers (4) befindlich ist.

4. Anordnung nach einem der vorangegangenen Ansprüche,
**dadurch gekennzeichnet, dass**
der externe Sensor in einem mit Ventilationsschlitzen versehenen Miniaturgehäuse (16) befindlich ist, wobei das Miniaturgehäuse (16) Mittel (17; 18) zum Befestigen, ausgebildet als Magnet, Befestigungsschraube oder dergleichen Vorrichtung aufweist.

5. Anordnung nach Anspruch 2,
**dadurch gekennzeichnet, dass**
die nasenartigen Fortsätze (15) so ausgebildet sind, dass ausschließlich eine vertikale Befestigung auf einer Norm-Hutschiene erfolgen kann, so dass in Verbindung mit der Ausbildung der Ventilationsschlitze (3) eine optimale Durchströmung und schnelles Ansprechen der Sensorik gewährleistet ist.

6. Anordnung nach einem der vorangegangenen Ansprüche,
**dadurch gekennzeichnet, dass**
der Mikrocontroller die Messwerte des ersten Sensors auf der Basis der prädiktiven Umgebungstemperaturwerte korrigiert.

7. Anordnung nach Anspruch 4,
**dadurch gekennzeichnet, dass**
je nach primärer Bestimmung der Anordnung als Feuchtigkeits- oder Temperatursensor eine farbige Anpassung des Bedienelementes (7) und des Miniaturgehäuses (16) erfolgt, so dass bei übereinstimmender Farbigkeit ersichtlich ist, dass der passende externe Sensor zum Einsatz kommt.

## Claims

1. An assembly for regulating the temperature and/or the air humidity in structures provided with an air conditioning facility and closed or closable with respect to their environment, such as switch cabinets, control installations, machine controls, electrical terminal boxes, mobile radio stations and similar enclosed facilities, wherein the assembly consists of a multi-part housing (1; 2) having a plurality of recesses or ventilation slots (3), wherein inside the housing (1; 2), a wiring carrier (4) for receiving electronic components (5) together with connecting terminals (6) for the air conditioning facility is provided, and furthermore having an operating element (7) for defining temperature and/or air humidity target values,
wherein
on the wiring carrier (4), a first sensor for detecting the relative ambient air humidity, a second sensor (9) for detecting the temperature of the ambient air flowing into the housing (1; 2), as well as a third sensor (10) for directly or indirectly detecting the heat loss of the electronic components (5) are provided,
**characterized in that**
the wiring carrier (4) has a plug or connector unit (11) for connecting an external temperature sensor, wherein an access to the plug and connector unit (11) is given via a breakthrough in the housing (1), the breakthrough being closed by means of a cap or a cover (12) in the closed state, after the cover or the cap (12) having been removed, a centring ring (13) is fixed in the breakthrough so that a plug or a coupling connector (14) is securely introduced, wherein the plug or the coupling connector (14) leads to the external temperature sensor via a cable connection,
wherein the centring ring (13) has a funnel-like or cone-like inner shape, wherein a micro-controller is provided on the wiring carrier (4) and detects at least the measured temperature values of the second and third sensor (9; 10) in a program-controlled way and predictively determines the real ambient temperature under consideration of the heat loss, and determines a correction factor from this for triggering the regulation.

2. The assembly according to claim 1,
**characterized in that**
at least one surface of the housing (2) has nose-like protrusions (15) for being attached at a standard top-hat rail.

3. The assembly according to any one of the preceding claims, **characterized in that**
the second sensor (9) is situated at a distance from heat loss relevant components on one of the sides of the wiring carrier (4).

4. The assembly according to any one of the preceding claims, **characterized in that**
the external sensor is situated in a miniature housing (16) provided with ventilation slots, wherein the miniature housing (16) has means (17; 18) for attachment, formed as a magnet, an attachment screw or a similar device.

5. The assembly according to claim 2,
**characterized in that**
the nose-like protrusions (15) are formed such that exclusively a vertical attachment on a standard top-hat rail may be performed, so that in conjunction with the formation of the ventilations slots (3), an optimum throughflow and a rapid response of the sensor system is guaranteed.

6. The assembly according to any one of the preceding claims, **characterized in that**
the micro-controller corrects the measured values of the first sensor on the basis of the predictive ambient temperature values.

7. The assembly according to claim 4,
**characterized in that**
depending on the primary purpose of the assembly as a humidity or temperature sensor, a coloured adaptation of the operating element (7) and the miniature housing (16) is performed so that in case of consistent colourfulness it is obvious that the suitable external sensor is used.

## Revendications

1. Dispositif de régulation de la température et/ou de l'humidité de l'air dans des structures pourvues d'une installation de climatisation, fermées ou pouvant être fermées par rapport à leur environnement, comme des armoires de commutation, des installations de commande, des commandes de machine, des coffrets de raccordement électriques, des stations de téléphonie mobile ou installations confinées similaires, sachant que le dispositif est composé d'un boîtier en plusieurs parties (1 ; 2) comportant une pluralité d'évidements ou de fentes de ventilation (3), sachant qu'un support de câblage (4) destiné à accueillir des composants électroniques (5) en plus de bornes de raccordement (6) pour l'installation de climatisation est prévu dans le boîtier (1 ; 2), et en outre d'un élément de commande (7) destiné à spécifier des valeurs de consigne de température et/ou d'humidité de l'air,
sachant que
un premier capteur destiné à saisir l'humidité relative de l'air ambiant, un deuxième capteur (9) destiné à saisir la température de l'air ambiant entrant dans le boîtier (1 ; 2) ainsi qu'un troisième capteur (10) destiné à saisir directement ou indirectement la chaleur dissipée des composants électroniques (5) sont prévus sur le support de câblage (4),
**caractérisé en ce que**
le support de câblage (4) présente une unité de fiche ou de prise (11) destinée à raccorder un capteur de température externe, sachant qu'un accès à l'unité de fiche ou de prise (11) est donné via une percée dans le boîtier (1), la percée est fermée à l'état fermé moyennant un capot ou un couvercle (12), une bague de centrage (13) est fixée dans la percée après enlèvement du couvercle ou du capot (12) de telle sorte qu'une fiche ou une prise d'accouplement (14) soit insérée de manière sûre, sachant que la fiche ou la prise d'accouplement (14) mène au capteur de température externe via une liaison par câble,
sachant que la bague de centrage (13) présente une forme intérieure de type entonnoir ou cône, sachant que sur le support de câblage (4) est prévu un microcontrôleur, lequel saisit au moins les valeurs de mesure de température du deuxième et du troisième capteur (9 ; 10) de manière commandée par programme et détermine la température ambiante réelle de manière prédictive compte tenu de la chaleur dissipée et calcule à partir de là un facteur de correction pour le déclenchement de régulation.

2. Dispositif selon la revendication 1,
**caractérisé en ce que**
au moins une face du boîtier (2) présente des prolongements (15) en forme de nez destinés à être fixés sur un rail chapeau normalisé.

3. Dispositif selon l'une des revendications précédentes,
**caractérisé en ce que**
le deuxième capteur (9) se trouve d'un des côtés du support de câblage (4) à une distance de composants pertinents en termes de chaleur dissipée.

4. Dispositif selon l'une des revendications précédentes,
**caractérisé en ce que**
le capteur externe se trouve dans un boîtier miniature (16) pourvu de fentes de ventilation, sachant que le boîtier miniature (16) présente des moyens (17 ; 18) pour la fixation, constitués comme aimant, vis de fixation ou organe similaire.

5. Dispositif selon la revendication 2,
**caractérisé en ce que**
les prolongements (15) en forme de nez sont constitués de telle sorte qu'une fixation verticale sur le rail chapeau normalisé puisse être réalisée exclusivement de sorte à garantir, en association avec la constitution des fentes de ventilation (3), une aération optimale et une réponse rapide de l'ensemble de capteurs.

6. Dispositif selon l'une des revendications précédentes,
**caractérisé en ce que**
le microcontrôleur corrige les valeurs de mesure du premier capteur sur la base des valeurs de température ambiante prédictives.

7. Dispositif selon la revendication 4,
**caractérisé en ce que**
selon la destination primaire du dispositif comme capteur d'humidité ou de température, une adaptation colorée de l'élément de conduite (7) et du boîtier miniature (16) soit effectuée de telle sorte qu'en cas de coloration concordante, il soit apparent que le capteur externe adéquat est mis en oeuvre.
